# EUROPÄISCHE PATENTANMELDUNG

(11) **EP 1 319 613 A1**
(43) Veröffentlichungstag der Anmeldung: **18.06.2003**
(21) Anmeldenummer: 02023536.2
(22) Anmeldetag: 22.10.2002
(51) Int. Cl.: B65G 47/90, B23Q 3/08, B25J 15/00

(54) **Vorrichtung und Verfahren zum Gefriergreifen von Miniaturbauteilen**

(30) Priorität: 17.12.2001 DE 10161946
(71) Anmelder: Naiss Automatisierungs- und Informationstechnik GmbH, 12489 Berlin-Adlershof (DE)
(72) Erfinder: Stephan, Jörg, Dr.-Ing., 12489 Berlin (DE)
(74) Vertreter: Liesegang, Eva

(57) **Zusammenfassung**

Die Erfindung bezieht sich auf eine Vorrichtung und ein Verfahren zum Gefriergreifen eines Miniaturbauteils mittels eines Greifelements (7) und zum Sichern des Miniaturbauteils (3) an dem Greifelement (7). Die Vorrichtung umfaßt eine Gefriereinrichtung (8) zum Kühlen einer Greiffläche (6) des Greifelements (7), um eine Gefrierflüssigkeit im Bereich der Greiffläche (6) wenigstens teilweise zu gefrieren. Darüber hinaus ist eine Heizeinrichtung zum Heizen der Greiffläche (6) des Greifelements (7) vorgesehen, um gefrorene Gefrierflüssigkeit im Bereich der Greiffläche (6) wenigstens teilweise aufzutauen. Nach dem teilweisen Auftauen kann das Miniaturbauteil (3) von der Greiffläche (6) mit Hilfe einer Abstreifvorrichtung (9) gelöst werden.

## Beschreibung

Die Erfindung liegt auf dem Gebiet von Vorrichtungen zum Greifen, Halten und Ablegen von Miniaturbauteilen, beispielsweise um die Miniaturbauteile zu verlagern oder zu spannen.

Beim Verlagern von Miniaturbauteilen müssen diese zunächst mit Hilfe der genutzten Vorrichtung aufgenommen werden. Danach muß das Miniaturbauteil an der genutzten Vorrichtung gesichert werden. Abschließend wird das Miniaturbauteil nach dem Verlagern abgelegt bzw. von der genutzten Vorrichtung gelöst. Der Begriff Miniaturbauteil in der hier genutzten Form umfaßt alle Gegenstände mit Abmessungen in der Größenordnung von einigen Millimetern oder kleiner, beispielsweise Halbleiterchips. Solche Miniaturbauteile sind in der Regel empfindlich gegenüber der Anwendung mechanischer Kräfte beim Aufnehmen mit Hilfe der genutzten Vorrichtung. Es ist in jedem Fall darauf zu achten, daß durch das Aufgreifen, Sichern und Verlagern des Miniaturbauteils an diesem keine Beschädigung verursacht wird.

Aufgabe der Erfindung ist es, eine verbesserte Vorrichtung und ein verbessertes Verfahren zum Greifen eines Miniaturbauteils mittels eines Greifelements und zum Sichern des Miniaturbauteils an dem Greifelement zu schaffen, bei der (dem) ein Verlagern ohne Beschädigung des zu verlagernden Miniaturbauteils gewährleistet ist. Darüber hinaus sollen die Vorrichtung und das Verfahren möglichst kostengünstig und mit Hilfe einfacher mechanischer Mittel herstellbar sein.

Diese Aufgabe wird erfindungsgemäß durch eine Vorrichtung nach dem unabhängigen Anspruch 1 und ein Verfahren nach dem unabhängigen Anspruch 10 gelöst.

Die Erfindung umfaßt den wesentlichen Gedanken, mittels Gefriergreifens Miniaturbauteile an einem Greifelement zu sichern. Hierbei wird eine gefrorene Gefrierflüssigkeit genutzt, um zwischen dem Miniaturbauteil und dem Greifelement zum Verlagern des Miniaturbauteils eine Halteverbindung auszubilden. Die gefrorene Gefrierflüssigkeit wirkt beim Verlagern als Haftmittel für das Miniaturbauteil an dem Greifelement. Um das Miniaturbauteil nach der Verlagerung oder einer Bearbeitung von dem Greifelement wieder lösen zu können, wird die Gefrierflüssigkeit zunächst wenigstens teilweise aufgetaut. Eine Abstreifvorrichtung ist vorgesehen, um das Miniaturbauteil danach vollständig von dem Greifelement zu lösen. Auf diese Weise ist sichergestellt, daß das Miniaturbauteil nach dem Auftauen der Gefrierflüssigkeit schnell und einfach von dem Greifelement getrennt werden kann.

Eine zweckmäßige Weiterbildung der Erfindung sieht vor, daß die Abstreifvorrichtung ein verlagerbares Abstreifbauteil umfaßt, welches zwischen einer eingefahrenen Stellung, in welcher ein Vorderteil des Abstreifbauteils in einem Bereich hinter der Greiffläche angeordnet ist, und einer ausgefahrenen Stellung verlagerbar ist, in welcher das Vorderteil des Abstreifbauteils durch eine Öffnung in der Greiffläche hindurchgreift. Hierdurch ist mit Hilfe eines einfachen mechanischen Aufbaus eine auch bei häufiger Benutzung der Vorrichtung, die zum Beispiel beim Einsatz in der Massenfertigung von Miniaturbauteilen, wie der Halbleiterchipherstellung, vorkommt, eine zuverlässige Trennungsmöglichkeit zwischen dem Greifelement und dem Miniaturbauteil nach dem Verlagern oder Bearbeiten gewährleistet.

Eine optimierte Nutzung der mit Hilfe des Abstreifbauteils auf das Miniaturbauteil ausgeübten Kräfte zum Lösen des Miniaturbauteils von dem Greifelement ist bei einer vorteilhaften Ausführungsform der Erfindung dadurch erreicht, daß eine Längsachse des Vorderteils des Abstreifbauteils in der ausgefahrenen Stellung im wesentlichen senkrecht auf der Greiffläche steht.

Die leichte Lösbarkeit des Miniaturbauteils von dem Greifelement nach dem Auftauen der Gefrierflüssigkeit wird bei einer vorteilhaften Ausgestaltung der Erfindung dadurch unterstützt, daß das Vorderteil an einem Ende des Vorderteils im wesentlichen spitz ausläuft.

Eine optimierte Gestaltung der Greiffläche des Greifelements, insbesondere hinsichtlich der Flächengröße in Abhängigkeit vom Anwendungsfall, ist bei einer zweckmäßigen Weiterbildung der Erfindung dadurch erreicht, daß die Greiffläche auf einem sich verjüngenden Vorsprung des Greifelements ausgebildet ist.

Bei einer bevorzugten Ausführungsform der Erfindung kann vorgesehen sein, daß die Greiffläche in einem Hohlraum zur wenigstens teilweisen Aufnahme des Miniaturbauteils an dem Greifelement gebildet ist, wobei der Hohlraum zum Spannen des Miniaturbauteils an dem Greifelement mindestens teilweise mit der Gefrierflüssigkeit befüllbar ist. Hierdurch ist es möglich, in dem Hohlraum so viel Gefrierflüssigkeit einzubringen, daß das Miniaturbauteil teilweise in die Gefrierflüssigkeit eintaucht. Auf diese Weise kann das Miniaturbauteil durch das Gefrieren der Gefrierflüssigkeit an dem Greifelement gespannt werden, wodurch eine ausreichende Fixierung des Miniaturbauteils für eine mechanische Bearbeitung des Miniaturbauteils geschaffen ist.

Ein zügiges Ein- und Ausführen des Miniaturbauteils in beziehungsweise aus dem Hohlraum ist bei einer vorteilhaften Weiterbildung der Erfindung dadurch erreicht, daß der Hohlraum zum Einführen des Miniaturbauteils in den Hohlraum auf einer der Greiffläche gegenüberliegenden Seite geöffnet ist.

Die Sicherung des Miniaturbauteils an dem Greifelement kann bei einer zweckmäßigen Ausführungsform der Erfindung dadurch unterstützt werden, daß die Greiffläche an dem Greifelement ausgebildet ist, so daß eine resultierende einer auf das Miniaturbauteil wirkenden Gewichtskraft in eine Richtung auf die Greifflächen zu wirkt.

Vorteilhaft kann bei einer Weiterbildung der Erfindung eine Mikrodosiereinrichtung zum Ausbringen der Gefrierflüssigkeit vorgesehen sein. Hierdurch ist das Abgeben einer für Miniaturbauteile optimierten Menge der Gefrierflüssigkeit ermöglicht.

Die abhängigen Verfahrensansprüche weisen die in Verbindung mit den zugehörigen Vorrichtungsansprüchen genannten Vorteile entsprechend auf. Als besonders vorteilhaft erweist sich das Verfahren beim Spannen von Miniaturbauteilen. Hierbei wird das Miniaturbauteil wenigstens teilweise in einem Hohlraum an dem Greifelement angeordnet. Der Hohlraum ist teilweise mit der Gefrierflüssigkeit gefüllt, so daß das Miniaturbauteil nach dem Anordnen in dem Hohlraum zum Teil in die Gefrierflüssigkeit eingetaucht ist. Mittels des Gefrierens der Gefrierflüssigkeit wird das Miniaturbauteil dann gespannt und für eine Bearbeitung ausreichend gehalten.

Die Erfindung wird im folgenden anhand von Ausführungsbeispielen unter Bezugnahme auf eine Zeichnung näher erläutert. Hierbei zeigen:
- Figur 1: eine Gefriergreifvorrichtung im Querschnitt;
- Figuren 2A, 2B und 2C: eine schematische Darstellung zur Erläuterung des Abstreifens eines Miniaturbauteils; und
- Figur 3: eine schematische Darstellung eines Abschnitts einer anderen Gefriergreifvorrichtung zum Spannen eines Miniaturbauteils.

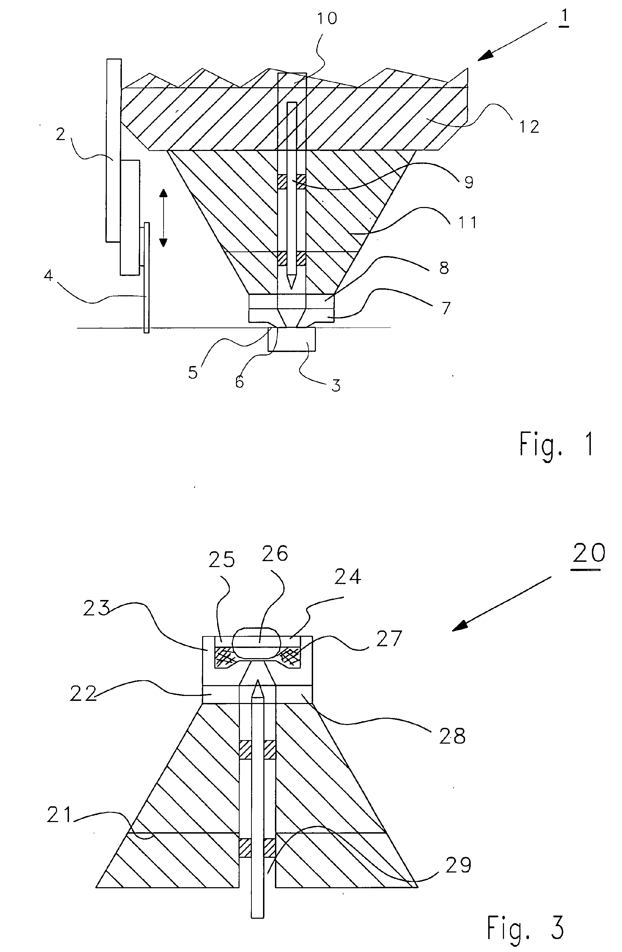

Figur 1 zeigt eine schematische Darstellung einer Gefriergreifvorrichtung 1 im Querschnitt. An der Gefriergreifvorrichtung 1 ist ein Haltesystem 2 befestigt. Die Gefriergreifvorrichtung 1 kann mit Hilfe einer Positioniereinrichtung (nicht dargestellt) relativ zu einem Miniaturbauteil 3 bewegt werden. Es kann alternativ vorgesehen sein, daß die Gefriergreifvorrichtung 1 in einer Stellung stationär ist, während das Miniaturbauteil 3 relativ zu der Gefriergreifvorrichtung 1 bewegt werden kann. Zu diesem Zweck kann das Miniaturbauteil 3 beispielsweise auf einer Translationsvorrichtung gelagert werden.

Mittels des Haltersystems 2 ist eine Mikrodosiereinrichtung 4 bewegbar angeordnet. Die Mikrodosiereinrichtung 4 wird genutzt, um auf einer äußeren Oberfläche 5 des Miniaturbauteils 3 eine Gefrierflüssigkeit aufzubringen. Die Menge der ausgebrachten Gefrierflüssigkeit ist mit Hilfe der Mikrodosiereinrichtung 4 in Abhängigkeit von der Größe des Miniaturbauteils 3 einstellbar. Miniaturbauteile umfassen alle Gegenstände mit Abmessungen in der Größenordnung von einigen Millimetern oder kleiner. Es kann sich hierbei beispielsweise um Halbleiterchips oder Teile hiervon handeln.

Nachdem auf einem Abschnitt der Außenfläche 5 des Miniaturbauteils 3 eine Menge der Gefrierflüssigkeit mit Hilfe der Mikrodosiereinrichtung 4 aufgebracht ist, werden das Miniaturbauteil 3 und die Gefriergreifvorrichtung 1 relativ zueinander bewegt, um zwischen einer Greiffläche 6 eines Greifelements 7 und der aufgebrachten Gefrierflüssigkeit ein Kontakt auszubilden. Hierbei können sich die Greiffläche 6 und die Außenfläche 5 des Miniaturbauteils teilweise unmittelbar berühren. Mit Hilfe einer Gefriereinrichtung 8, die vorzugsweise als ein Peltier-Modul ausgebildet ist, wird die auf der Außenfläche 5 des Miniaturbauteils 3 aufgebrachte Gefrierflüssigkeit nun gefroren. Auf diese Weise wird das Miniaturbauteil 3 an dem Greifelement 7, d. h. an der Greiffläche 6, fixiert. Nun kann die Gefriergreifvorrichtung 1 mit Hilfe des Haltesystems 2 bewegt werden, um das Miniaturbauteil 3 zu verlagern.

Nach dem Verlagern muß das Miniaturbauteil 3 zum Ablegen wieder von dem Greifelement 7 gelöst werden. Zu diesem Zweck verfügt die Gefriergreifvorrichtung 1 über ein Abstreifbauteil 9, welches in einem Kanal 10 bewegbar gelagert ist. Der Kanal 10 ist durch das Greifelement 7, die Gefriereinrichtung 8, eine Wärmebrücke 11 und ein Kühlsystem 12 hindurch ausgebildet. Das Kühlsystem 12 dient zur Ableitung von Wärme, die auf der heißen Seite des Peltier-Moduls 8 entsteht und über die Wärmebrücke 11 übertragen wird.

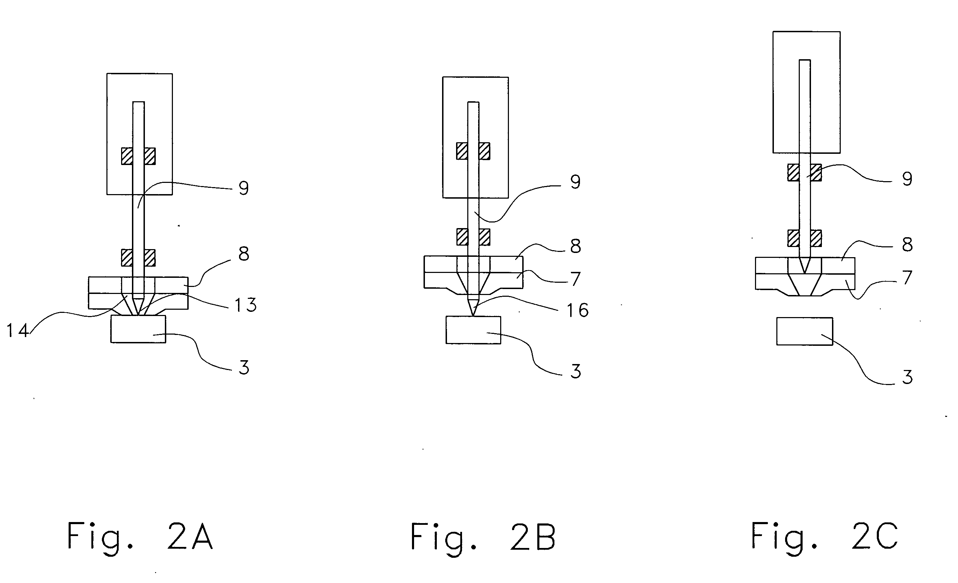

In den Figuren 2A, 2B und 2C ist der Vorgang zum Abstreifen des Miniaturbauteils 3 schematisch dargestellt. Zunächst wird die gefrorene Gefrierflüssigkeit im Bereich der Greiffläche 6 wenigstens teilweise aufgetaut. Zu diesem Zweck sind in das Greifelement 7 Heizelemente, beispielsweise Heizdrähte (nicht dargestellt), integriert. Gemäß Figur 2A befindet sich ein Vorderteil 13 des Abstreifbauteils 9 zunächst in einem Bereich 14 hinter der Greiffläche 6. Eine Kontaktfläche 15 zwischen der Greiffläche 6 und der Außenfläche 5 des Miniaturbauteils weist zu diesem Zeitpunkt noch ihre maximale Größe auf. Gemäß Figur 2B durchgreift das Vorderteil 13 des Abstreifbauteils 9 dann die Greiffläche 6, so daß das Vorderteil 13 nach vom übersteht. Das Vorderteil 13 läuft an einem Ende 16 spitz aus. Auf diese Weise wird die Kontaktfläche zwischen der Außenfläche 5 des Miniaturbauteils 3 und der Gefriergreifvorrichtung 1 verkleinert und umfaßt im wesentlichen nur noch einen Kontakt zwischen dem spitzen Ende 16 und der Außenfläche 5. Diese Kontaktfläche ist dann gemäß Figur 2B so verkleinert, daß das Miniaturbauteil 3 aufgrund der auf das Miniaturbauteil 3 wirkenden Gewichtskräfte abfällt. Das Abstreifbauteil 9 wird dann wieder zurückgezogen, wie dies in Figur 2C gezeigt ist.

Die Kontaktfläche zwischen der Gefriergreifvorrichtung 1 und der Außenfläche 5 des Miniaturbauteils 3 wird zum Trennen des Miniaturbauteils 3 von der Gefriergreifvorrichtung 1 verkleinert. In der Ausgangsstellung (vgl. Figur 2A) entspricht die Kontaktfläche im wesentlichen der Greiffläche 6. Die Greiffläche 6 ist auf einem verjüngenden Vorsprung 17 des Greifelements 7 gebildet. Zum Lösen des Miniaturbauteils 3 wird die Kontaktfläche dann im wesentlichen auf den Bereich des spitzen Endes 16 des Abstreifbauteils 9 vermindert. Die zwischen dem spitzen Ende 16 des Abstreifbauteils 9 und der Außenfläche 5 des Miniaturbauteils 3 wirkenden Haltekräfte, die beispielsweise Adhäsionskräfte umfassen, sind dann jedoch geringer als die auf das Miniaturbauteil 3 wirkenden Gewichtskräfte, so daß das Miniaturbauteil 3 von der Gefriergreifvorrichtung 1 gelöst wird. Es kann auch vorgesehen sein, daß Miniaturbauteil 3 mit Hilfe des Abstreifbauteils 9 gegen eine Basisfläche (nicht dargestellt) zu drükken, so daß zwischen der Außenfläche 5 des Miniaturbauteils 3 und der Basisfläche Kräfte wirken, die größer als die zwischen dem spitzen Ende 16 des Abstreifbauteils 9 und der Außenfläche 5 wirkenden Kräfte sind. Auf diese Weise können von der Gefriergreifvorrichtung 1 nach dem Verlagern auch Miniaturbauteile getrennt werden, deren Gewichtskräfte zum Lösen allein nicht ausreichen.

Das Abstreifbauteil 9 wird beim Lösen des Miniaturbauteils 3 von der Greiffläche 9 zweckmäßig in einer Richtung senkrecht zur Greiffläche 6 bewegt, so daß die Kontaktfläche zwischen dem spitzen Ende 16 des Abstreifbauteils 9 und der Außenfläche 5 des Miniaturbauteils 3 minimiert ist. Darüber hinaus führt eine Bewegung des Abstreifbauteils 9 in dieser Weise dazu, daß das Miniaturbauteil 3 möglichst gleichmäßig über den gesamten Bereich der Kontaktfläche von der Greiffläche 6 gelöst wird.

Figur 3 zeigt einen vorderen Abschnitt einer anderen Gefriergreifvorrichtung 20 schematisch im Querschnitt. An einer Wärmebrücke 21 ist ein Peltier-Modul 22 angebracht. Auf dem Peltier-Modul 22 ist ein Greifelement 23 befestigt. In dem Greifelement 23 ist ein Hohlraum 24 gebildet, der auf einer auf dem Peltier-Modul 22 abgewandten Seite 25 offen ist. Zum Spannen eines Miniaturbauteils 26 mittels der Gefriergreifvorrichtung 20 ist der Hohlraum 24 teilweise mit Gefrierflüssigkeit 27 so gefüllt, daß das Miniaturbauteil 26 teilweise in die Gefrierflüssigkeit 27 eingetaucht ist. Mittels des Gefrierens der Gefrierflüssigkeit 27, wozu das Peltier-Modul 22 genutzt wird, wird das Miniaturbauteil 26 sicher an der Gefriergreifvorrichtung 20 gespannt. Hierdurch ist nicht nur das Halten des Miniaturbauteils 26 an der Gefriergreifvorrichtung 20 zum Verlagern möglich, sondern auch eine Sicherung des Miniaturbauteils 26 an der Gefriergreifvorrichtung 20 zum Bearbeiten des Miniaturbauteils 26. Nach dem Bearbeiten wird die Gefrierflüssigkeit 27 wenigstens teilweise aufgetaut. Zum Ausführen dieses Schrittes sind in dem Greifelement zweckmäßig ein oder mehrere Heizdrähte (nicht dargestellt) vorgesehen. Anschließend wird ein Abstreifbauelement 28 in einem Kanal 29 bewegt, um das Miniaturbauteil 26 von dem Greifelement 23 zu lösen. Dieser Schritt wird analog gemäß dem unter Bezugnahme auf die Figuren 2A, 2B und 2C beschriebenen Verfahren ausgeführt.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Vorrichtung zum Gefriergreifen eines Miniaturbauteils (3; 26) mittels eines Greifelements (7; 23) und zum Sichern des Miniaturbauteils (3; 26) an dem Greifelement mit:
- einer Gefriereinrichtung (8; 22) zum Kühlen einer Greiffläche (6) des Greifelements (7; 23), um eine Gefrierflüssigkeit im Bereich der Greiffläche (6) wenigstens teilweise zu gefrieren;
- einer Heizeinrichtung zum Heizen der Greiffläche (6) des Greifelements (7; 23), um gefrorene Gefrierflüssigkeit im Bereich der Greiffläche (6) wenigstens teilweise wieder aufzutauen; und
- einer Abstreifvorrichtung zum Lösen des Miniaturbauteils (3; 26) von der Greiffläche (6) nach dem wenigstens teilweisen Auftauen der Gefrierflüssigkeit im Bereich der Greiffläche (6).

2. Vorrichtung nach Anspruch 1, **dadurch gekennzeichnet, daß** die Abstreifvorrichtung ein verlagerbares Abstreifbauteil (9) umfaßt, welches zwischen einer eingefahrenen Stellung, in welcher ein Vorderteil (13) des Abstreifbauteils (9) in einem Bereich hinter der Greiffläche (6) angeordnet ist, und einer ausgefahrenen Stellung verlagerbar ist, in welcher das Vorderteil (13) des Abstreifbauteils (9) durch eine Öffnung in der Greiffläche (6) hindurch greift.

3. Vorrichtung nach Anspruch 2, **dadurch gekennzeichnet, daß** eine Längsachse des Vorderteils (13) des Abstreifbauteils (9) in der ausgefahrenen Stellung im wesentlichen senkrecht auf der Greiffläche (6) steht.

4. Vorrichtung nach Anspruch 2 oder 3, **dadurch gekennzeichnet, daß** das Vorderteil (13) an einem Ende (16) des Vorderteils (13) im wesentlichen spitz ausläuft.

5. Vorrichtung nach einem der vorangehenden Ansprüche, **dadurch gekennzeichnet, daß** die Greiffläche (6) auf einem sich verjüngenden Vorsprung (17) des Greifelements (7) ausgebildet ist.

6. Vorrichtung nach einem der vorangehenden Ansprüche, **dadurch gekennzeichnet, daß** die Greiffläche in einem Hohlraum (24) zur wenigstens teilweisen Aufnahme des Miniaturbauteils (26) an dem Greifelement (23) gebildet ist, wobei der Hohlraum (24) zum Spannen des Miniaturbauteils (26) an dem Greifelement (23) mindestens teilweise mit der Gefrierflüssigkeit (27) befüllbar ist.

7. Vorrichtung nach Anspruch 6, **dadurch gekennzeichnet, daß** der Hohlraum (24) zum Einführen des Miniaturbauteils (26) in den Hohlraum (24) auf einer der Greiffläche gegenüberliegenden Seite geöffnet ist.

8. Vorrichtung nach einem der vorangehenden Ansprüche, **dadurch gekennzeichnet, daß** die Greiffläche an dem Greifelement (23) ausgebildet ist, so daß eine Resultierende einer auf das Miniaturbauteil (26) wirkenden Gewichtskraft in einer Richtung auf die Greiffläche zu wirkt.

9. Vorrichtung nach einem der vorangehenden Ansprüche, **gekennzeichnet durch** eine Mikrodosiereinrichtung (4) zum Ausbringen der Gefrierflüssigkeit.

10. Verfahren zum Gefriergreifen eines Miniaturbauteils (3; 26) mittels eines Greifelements (7; 23) eines Gefriergreifers (1; 20) und zum Sichern des Miniaturbauteils (3; 26) an dem Greifelement (7; 23), das Verfahren die folgenden Schritte aufweisend:
- Ausbringen einer Gefrierflüssigkeit auf einem Greifbereich einer Außenfläche des Miniaturbauteils (3; 26);
- Ausbilden eines Berührungskontakts zwischen einer Greiffläche des Greifelements (7; 23) und der im Greifbereich aufgebrachten Gefrierflüssigkeit;
- Gefrieren der ausgebrachten Gefrierflüssigkeit mittels einer Gefriereinrichtung (8; 22) zum Sichern des Miniaturbauteils (3; 26) an dem Greifelement (7; 23);
- wenigstens teilweises Auftauen der gefrorenen Gefrierflüssigkeit mittels einer Heizeinrichtung; und
- Lösen des Miniaturbauteils (3; 26) von der Greiffläche nach dem wenigstens teilweisen Auftauen der Gefrierflüssigkeit mit Hilfe einer Abstreifvorrichtung.

11. Verfahren nach Anspruch 10, **dadurch gekennzeichnet, daß** zum Lösen des Miniaturbauteils (3; 26) ein Kontaktbereich zwischen der Außenfläche des Miniaturbauteils (3; 26) und dem Greifelement (7; 23) verkleinert wird.

12. Verfahren nach Anspruch 11, **dadurch gekennzeichnet, daß** der Kontaktbereich zwischen der Außenfläche des Miniaturbauteils (3; 26) und dem Greifelement (7; 23) so verkleinert wird, daß sich das Miniaturbauteil (3; 26) infolge der auf das Miniaturbauteil (3; 26) wirkenden Gewichtskraft löst.

13. Verfahren nach Anspruch 11 oder 12, **dadurch gekennzeichnet, daß** der Kontaktbereich zwischen der Außenfläche des Miniaturbauteils (3; 26) und dem Greifelement (7; 23) zum Lösen des Miniaturbauteils (3; 26) auf einen verkleinerten Kontaktbereich zwischen der Außenfläche des Miniaturbauteils (3; 26) und einer Spitze eines von der Abstreifvorrichtung umfaßten Abstreifbauteils (9; 28) vermindert wird.

14. Verfahren nach Anspruch 13, **dadurch gekennzeichnet, daß** zum Lösen des Miniaturbauteils (3; 26) von der Greiffläche das Abstreifbauteil (9, 28) aus einer eingefahrenen Stellung, in welcher ein Vorderteil des Abstreifbauteils (9; 28) in einem Bereich hinter der Greiffläche angeordnet ist, und einer ausgefahrenen Stellung verlagert wird, in welcher das Vorderteil des Abstreifbauteils (9; 28) durch eine Öffnung in der Greiffläche hindurch greift.

15. Verfahren nach Anspruch 14, **dadurch gekennzeichnet, daß** das Abstreifbauteil (9; 28) beim Verlagern von der eingefahrenen Stellung in die ausgefahrene Stellung entlang einer Achse bewegt wird, die im wesentlichen senkrecht auf der Greiffläche steht.

16. Verfahren nach einem der Ansprüche 10 bis 15, **dadurch gekennzeichnet, daß** das Miniaturbauteil (26) wenigstens teilweise in einem an dem Greifelement (23) ausgebildeten Hohlraum (24) eingebracht wird, wobei die Greiffläche in dem Hohlraum (24) gebildet ist, und daß der Hohlraum (24) beim Ausbringen der Gefrierflüssigkeit zumindest teilweise mit der Gefrierflüssigkeit (27) befüllt wird, um das Miniaturbauteil (26) wenigstens teilweise zu umgeben, so daß das Miniaturbauteil (26) mittels des Gefrierens der Gefrierflüssigkeit (27) für eine Bearbeitung gespannt wird.
